# EUROPEAN PATENT SPECIFICATION

(11) **EP 0 430 446 B1**
(45) Date of publication and mention of the grant of the patent: **01.12.1993**
(21) Application number: 90311938.6
(22) Date of filing: 31.10.1990
(51) Int. Cl.: H02B 13/025

(54) **Enclosures for electrical switchgear**
Einschliessungen für elektrische Schaltanlage
Enceintes pour installation de commutation électrique

(30) Priority: 01.12.1989 GB 8927193
(43) Date of publication of application: 05.06.1991
(73) Proprietor: NORTHERN ENGINEERING INDUSTRIES PLC, Newcastle upon Tyne NE3 3SB (GB)
(72) Inventor: Jackson, Leonard, Gosforth, Newcastle Upon Tyne NE3 5LH (GB)
(74) Representative: Gunn, Michael Alan

(56) References cited:
- CH-A- 86 640
- DE-B- 1 123 734
- PATENT ABSTRACTS OF JAPAN vol. 3, no. 25 (E-94) 28 February 1979, & JP-A-54 3241 (MEIDENSHA KK) 11 January 1979,

## Description

This invention relates to enclosures for electrical switchgear and has particular application to enclosures for switchgear incorporating high voltage electric circuit breakers.

The enclosures for such switchgear are commonly of welded steel and are divided into compartments typically housing cables, current transformers, busbars, auxiliary equipment, and the circuit breaker.

With vertically isolatable switchgear - i.e. switchgear in which the circuit breaker is moved vertically within the enclosure to allow connection or isolation of the associated mains circuit - the circuit breaker is commonly located beneath the other compartments and typically includes a sealed chamber filled with insulating and arc interteruption media, for example SF₆ gas.

Fault currents and voltages within the circuit breaker chamber may be extremely high and, if an abnormal condition should arise whereby the operational capability of the equipment is impaired, inadvertent and undesirable arcing may occur within the chamber.
The consequential temperature and pressure rises within the chamber resulting from this undesirable arcing may be so high that disruptive failure of the chamber can occur.

It is known to provide pressure relief means on the chambers to permit venting thereof once the pressure therein exceeds a predetermined value. Examples are Japanese application JP-A-543241 and German specification DE-A-1123734. The pressure created within the enclosure as a result of faults within the circuit breaker chamber can also cause serious damage to the enclosure, particularly as this increased pressure is created in the lower regions of the enclosure and cannot be readily exhausted upwardly therefrom.

It would be desirable to be able to provide an enclosure for vertically isolatable electrical switchgear which was less prone to damage as a result of the effects of internal faults in the circuit breaker chamber.

According to the present invention there is provided an enclosure for electrical switch gear, the enclosure containing within its lower regions, a vertically movable circuit breaker assembly including a sealed chamber housing circuit breaker components, the enclosure being characterised by outlets provided one to each side of said lower regions, said outlets feeding into respective exhaust chimneys defined in part by sidewalls and located one to each side of the enclosure, each outlet being provided with a flexible sheet cover adapted to be displaced from its cover position on increase of gas pressure within the enclosure.

A substation may comprise a plurality of enclosures according to the invention disposed side by side, an exhaust chimney being defined between a sidewall of one enclosure, a sidewall of the adjacent enclosure and front and rear panels whereby said exhaust chimney is common to the one and the adjacent enclosures.

Alternatively, the sidewalls of adjacent enclosures, together with associated front and rear panels, may define between them a space in which is located an upright panel dividing said space into first and second exhaust chimneys, one associated with each of the adjacent enclosures.

Preferably the or each exhaust chimney feeds into an associated ventilation system, while the or each outlet from the lower regions of an enclosure, and/or the top of the or each exhaust chimney, may be provided with a flexible sheet cover adapted to be displaced from its cover position on increase of gas pressure within the enclosure.

By way of example only, an embodiment of the invention will now be described in greater detail with reference to the accompanying drawings in which:

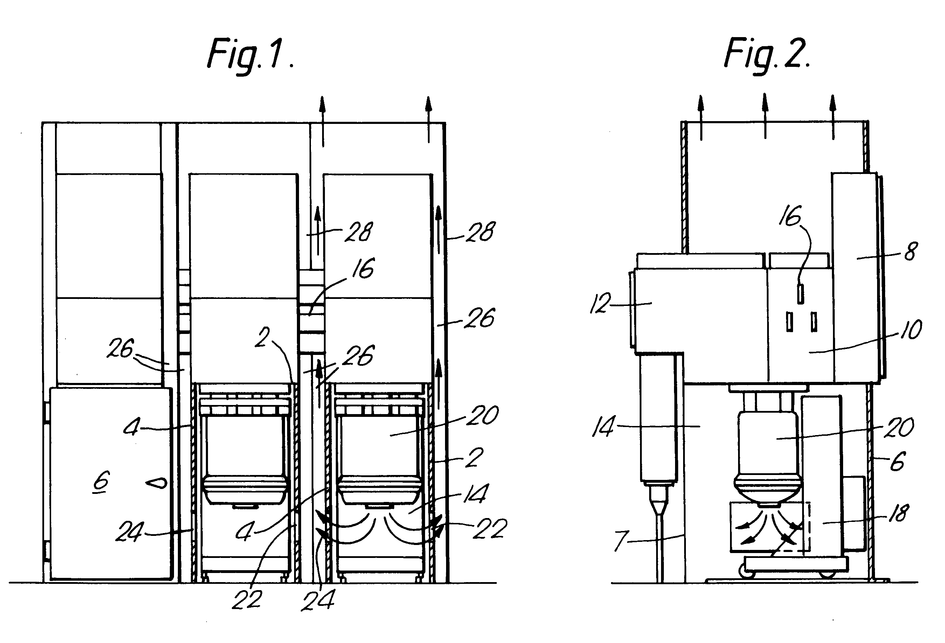

Fig 1 is a front view of a series of enclosures according to the invention, two with their front doors removed, and
Fig. 2 is a side view of the switchgear housed within each of the enclosures of Fig.1.

Referring to the drawings, there are illustrated switchgear enclosures each of welded steel and each including a pair of opposed sidewalls 2,4 and an openable door 6 fronting the lower regions of the enclosure.

Each enclosure includes an instrument and relay compartment 8, a busbar chamber 10, a current transformer chamber 12 and a circuit breaker compartment 14 in the lower regions thereof below the chambers 10 and 12. Busbars 16 extend between adjacent enclosures.

The compartment 14, which is defined between the lower regions of the sidewalls 2,4, a front wall 6 which effectively is a door, and a rear wall 7, houses a carriage 18 which can be wheeled into and out of the compartment 14 through the door 6, the carriage 18 carrying a sealed chamber 20 filled with, for example SF₆ gas and containing a high voltage electric circuit breaker. The chamber 20 can be moved vertically on the carriage 18 to allow connection or isolation of the mains circuit.

As mentioned above, the chambers 20 can be prone to explosion in the event of abnormal operating conditions therein, and this can lead to deformation and damage to the enclosures and may be prejudicial to the safety of personnel adjacent the enclosures. This problem is particularly relevant to vertically-isolatable switchgear in which the circuit breaker chambers 20 are located in the lower regions of the enclosures below the busbar chambers 10 and current transformer chambers 12, which chambers 10 and 12 effectively block-off exhaust passages upwardly within the enclosures.

In order to provide for internal relief of the enclosures on build-up of pressure therein due to malfunctioning of the circuit breakers, there are provided, for each enclosure, a pair of outlets 22,24 in the lower regions of the sidewalls 2,4, these outlets each feeding into a vertical chimney 26 defined by the associated sidewall 2 or 4 of the enclosure, a vertical panel 28 extending parallel with the sidewall 2 or 4 and disposed between the sidewalls of adjacent enclosures, and front and rear panels (not shown) extending between adjacent enclosures.

Thus it will be appreciated that gas under pressure within the compartment 14 is exhausted in the direction of the arrows through the outlets 22,24 and into the chimneys 26, the upper ends of which chimneys may feed into a ventilation system (not shown).

Each outlet 22,24, as well as the top of each chimney 26, is preferably provided with a flap, typically of 1 mm thick sheet material, which normally covers the outlet and which is displaced by the exhaust gases on pressure build-up within the enclosure to permit passage of the gases to exhaust.

The precise configurations and locations of the chimneys 26 may vary from those shown in the drawings - in particular, the panels 28 may be dispensed with, whereby a chimney is defined between the sidewalls of adjacent enclosures together with front and rear panels, the chimney being common to said enclosures.

## Claims

1. An enclosure for electrical switch gear, the enclosure containing within its lower regions, a vertically movable circuit breaker assembly including a sealed chamber housing circuit breaker components, the enclosure being characterised by outlets (22,24) provided one to each side of said lower regions, said outlets feeding into respective exhaust chimneys (26) defined in part by sidewalls (2,28) and (4,28) and located one to each side of the enclosure, each outlet (22,24) being provided with a flexible sheet cover adapted to be displaced from its cover position on increase of gas pressure within the enclosure.

2. An enclosure as claimed in claim 1 characterised in that each chimney (26) feeds into an associated ventilation system.

3. An enclosure as claimed in claim 1 or claim 2 characterised in that the chimneys (26) are further defined by front and rear panels of the enclosure, a front one of which panels includes a door (6) for insertion of said circuit breaker components.

4. A substation comprising a plurality of enclosures as claimed in any one of claims 1 to 4, the enclosures being disposed side by side, an exhaust chimney being defined between a sidewall (2) of one enclosure, a sidewall (4) of the adjacent enclosure and front and rear panels characterised in that said exhaust chimney is common to the one and the adjacent enclosures.

5. A substation comprising a plurality of enclosures as claimed in any one of claims 1 to 5, the enclosures being disposed side by side, characterised in that the sidewalls (2,4) of adjacent enclosures, together with associated front and rear panels (6), define between them a space in which is located an upright panel (28) dividing said space into first and second exhaust chimneys (26), one associated with each of the adjacent enclosures.

## Patentansprüche

1. Gehäuse für eine elektrische Schaltanlage, welches in seinen unteren Bereichen einen vertikal beweglichen Leistungsschalteraufbau aufnimmt, der eine abgedichtete Kammer besitzt, welche die Bauteile des Leistungsschalters aufnimmt, wobei das Gehäuse
gekennzeichnet ist durch Auslässe (22, 24), die auf jeder Seite der unteren Bereiche angeordnet sind und in jeweilige Ausblaskamine (26) führen, die teilweise von den Seitenwänden (2, 28) und (4, 28) definiert und auf jeder Seite des Gehäuses angeordnet sind, wobei jeder Auslaß (22, 24) mit einer flexiblen Blechabdeckung versehen ist, die aus der Abdeckstellung versetzbar ist, wenn der Gasdruck innerhalb des Gehäuses ansteigt.

2. Gehäuse nach Anspruch 1,
dadurch gekennzeichnet, daß jeder Kamin (26) in ein zugeordnetes Ventilationssystem führt.

3. Gehäuse nach Anspruch 1 oder 2,
dadurch gekennzeichnet, daß die Kamine (26) außerdem durch vordere und rückwärtige Platten des Gehäuses definiert sind, wobei eine Frontplatte eine Tür (6) aufweist, um die Bauteile des Leistungsschalters einfahren zu können.

4. Unterstation mit mehreren Gehäusen nach den Ansprüchen 1 bis 4, die seitlich benachbart zueinander angeordnet sind, wobei ein Ausblaskamin zwischen einer Seitenwand (2) eines Gehäuses, einer Seitenwand (4) des benachbarten Gehäuses und vorderen und rückwärtigen Platten definiert ist,
dadurch gekennzeichnet, daß der Ausblaskamin dem einen und dem benachbarten Gehäuse gemeinsam ist.

5. Unterstation mit mehreren Gehäusen nach den Ansprüchen 1 bis 3, die seitlich nebeneinander angeordnet sind,
dadurch gekennzeichnet, daß die Seitenwände (2, 4) benachbarter Gehäuse zusammen mit zugeordneten vorderen und rückwärtigen Platten (6) zwischen sich einen Raum definieren, in dem eine aufrechtstehende Platte (28) angeordnet ist, die den Raum in einen ersten und einen zweiten Kamin (26) unterteilt, wobei die Kamine jeweils den benachbarten Gehäusen zugeordnet sind.

## Revendications

1. Enceinte pour commutateur électrique, l'enceinte contenant dans ses zones inférieures un disjoncteur déplaçable verticalement comprenant une chmabre scellée abritant des composants du disjoncteur, l'enceinte étant caractérisée en ce que des orifices de sortie (22, 24) sont prévus sur chaque côté desdites zones inférieures, lesdits orifices de sortie donnant dans des cheminées d'évacuation respective (26) définies en partie par des parois latérales (2, 28) et (4, 28) et situées de chaque côté de l'enceinte, chaque orifice de sortie (22, 24) étant pourvu d'une enveloppe de couverture flexible adaptée à se déplacer de sa position de recouvrement par l'augmentation de la pression du gaz à l'intérieur de l'enceinte.

2. Enceinte selon la revendication 1, caractérisée en ce que chaque cheminée (26) conduit dans un système associé de ventilation.

3. Enceinte selon la revendication 1 ou la revendication 2, caractérisée en ce que les cheminées (26) sont en outre définies par des panneaux arrière et avant de l'enceinte, un panneau avant parmi lesdits panneaux comprend une porte (6) pour l'insertion desdits composants du disjoncteur.

4. Sous-station comprenant une pluralité d'enceintes selon l'une quelconque des revendications 1 à 3, les enceintes étant disposées côte à côte, une cheminée d'évacuation étant définie entre une paroi latérale (2) d'une enceinte, une paroi latérale (4) de l'enceinte adjacente et les panneaux arrière et avant, caractérisée en ce que ladite cheminée d'évacuation est commune aux deux enceintes adjacentes.

5. Sous-station comprenant une pluralité d'enceintes selon l'une quelconque des revendications 1 à 3, les enceintes étant disposées côte à côte, caractérisée en ce que les parois latérales (2, 4) des enceintes adjacentes, avec les panneaux avant et arrière (6), définissent entre eux un espace dans lequel est situé un panneau vertical (28) divisant ledit espace en une première et seconde cheminée d'évacuation (26), une associée à chaque enceinte adjacente.
